# EUROPEAN PATENT SPECIFICATION

(11) **EP 1 036 754 B1**
(45) Date of publication and mention of the grant of the patent: **07.07.2004**
(21) Application number: 99830133.7
(22) Date of filing: 11.03.1999
(51) Int. Cl.: B67B 1/00, B65G 35/00

(54) **A device for continuously feeding corks**
Vorrichtung zum kontinuierlichen Zuführen von Korken
Dispositif pour l'alimentation en continu de bouchons

(43) Date of publication of application: 20.09.2000
(73) Proprietor: Cames snc di Colla G. & Sardi G., 12058 S. Stefano Belbo (Cuneo) (IT)
(72) Inventor: Sardi, Giovanni, 14053 Canelli (Asti) (IT); Colla, Giovanni, 12058 San Stefano Belbo (Cuneo) (IT)
(74) Representative: Robba, Pierpaolo

(56) References cited:
- DE-C- 389 043
- FR-A- 2 645 950
- FR-A- 2 746 383
- GB-A- 185 851
- US-A- 3 889 798
- US-A- 5 558 202

## Description

The present invention relates to a device for continuously feeding or transferring corks.

More particularly, the invention refers to a device for transferring corks or stoppers made of other materials from a cork loading zone to a corking machine of the type employed in bottling plants, the device complying with the rules concerning the foodstuff sanitary conditions and analysis of hazards and control of critical points HACCP, presently in force in the EU countries in accordance with the CEE council Directives 93/43/CEE and 96/3/CE concerning the safety at the workplace (Italian decree Law D.Lgs. 626/94 of 19.09.1994).

Automatic bottling systems require feeding machines capable of supplying the corking machine with a large number of corks in a continuous manner, while maintaining the corks sterile and complying with the safety and sanitary rules presently in force.

According to the prior art, corks of generally cylindrical shape are poured into the hopper of the feeding machine from which they are haphazardly transferred to the corking machine by means of blowers or fans or by means of conveyor belts or helical brushes.

GB-A-185,851, for instance, discloses a device for feeding tapered corks to a corking machine, wherein the corks are initially fed in bulk to a hopper or other receptacle and then caused to fall onto an inclined endless conveyor by means of a pair of roller feeds; each cork then rolls downwards against the travel of the conveyor until it comes to a stop, with the tapered end presented upwards, in which position it is carried to a ramming device.

These known systems have therefore the drawback of requiring a readjustment of the corks in correspondence of the corking machine.

A drawback with the use of blowers or fans derives from the fact that such systems draw the air for transporting the corks from the surrounding environment with prejudice of the cork sterility.

Another known way for transferring the corks is disclosed in Italian patent IT 1.159.690 in the name of the present applicant and directed to an automatic device for orienting corks.

According to the teachings of IT 1.159.690, for transferring the corks there is disclosed a device comprising a pusher actuated by a pneumatic cylinder for pushing the corks within a duct leading to the corking machine, in which duct the corks are disposed in rows (one after the other).

However the device according to the invention of the above mentioned Italian patent is relatively too slow for handling the large number of corks requested by the corking machines presently in use.

A first problem to be solved by the present invention is therefore to accomplish the transfer or feeding of a large number of corks in an orderly manner while preserving their sterility.

Another drawback of the known bottling systems resides in that the feeding machine is often located at a certain distance from the corking machine and moreover the latter has to be fed from above since the bottles to be stoppered advance in an upright standing position.

Thus a system capable of applying to the corks a force or push strong enough to transfer them along ducts of a certain length and comprising upward sections becomes unavoidable.

Another problem that the present invention aims to solve is thus to realize a device capable of moving the corks along a path that can be a winding path and/or be of appreciable length and/or comprise upward sections, more effectively than those of the prior art.

Another drawback when transferring corks from a place to another is due to the tolerance of commonly used corks, with the diameters in a given batch differing even by a few millimetres.

This entails a low efficiency of the known systems for transferring corks that are not capable to cope with diameter changes of the corks, as it is well-known.

Another object of the present invention is therefore to provide a device for feeding corks whose working is not negatively affected by different diameters of the corks.

Another drawback of the prior art systems, particularly when using stoppers made of cork or "reconstructed" cork, resides in that such corks are continuously subjected to rubbing with one another in the loading zone of the feeding machine and during their conveying.

Because of this rubbing, corks powders and particles are generated that are transported along the ducts into the bottles, thus contaminating the bottle contents.

Moreover such powders and particles can gather near the feeding device thus causing failure or clogging of the feeding system.

Therefore a further problem that the present invention aims to solve is to prevent the powders and particle from building up in the cork transferring ducts as well as the entry of such powders and particles into the bottles.

The above and other objects of the invention are accomplished through a device for continuously feeding corks as claimed in the attached claims.

The invention will now be disclosed with reference to the attached drawings in which:
Figure 1 is a side view of a device according to the invention;
Figure 2 is a schematic front view of a device according to the invention;
Figure 3 is a side view of a device according to the invention from the opposite side with respect to the view of Figure 1;
Figure 4 is a schematic view of another embodiment of a device according to the invention;
Figure 5 is a side view of a cork feeding machine incorporating a device according to the invention.

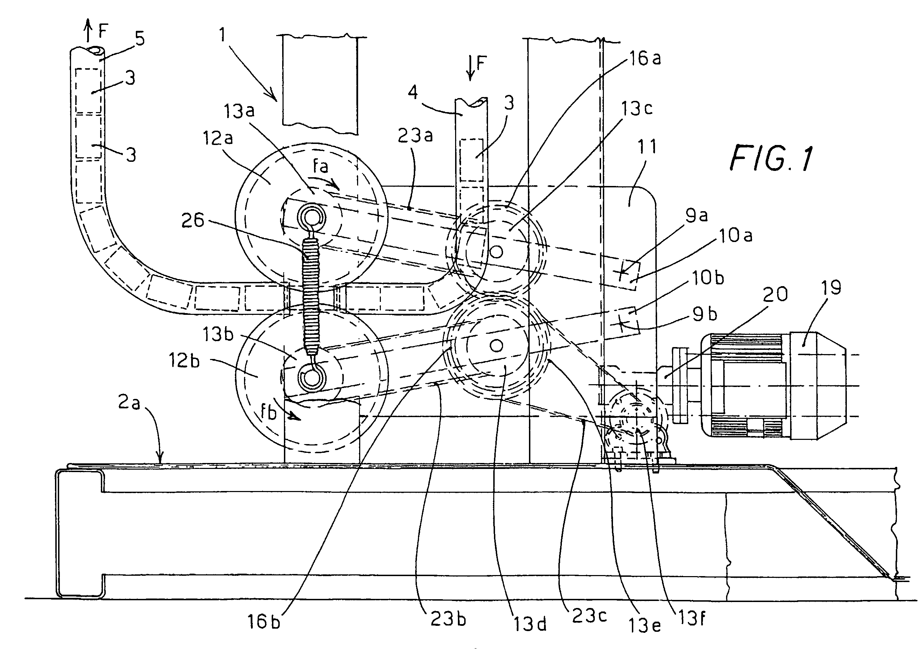

With reference to Figure 1, the feeding device 1 according to the invention substantially comprises a pair of wheels 12a and 12b lying in a same plane and rotatable in opposite directions as shown by the arrows fa and fb.

The wheels can be real (solid) wheels, preferably of a plastic material, or can be realized as circular brushes.

Preferably the wheels 12a and 12b are maintained near to each other by elastic means comprising a pair of helical springs, or alternatively by counterweights accomplishing the same function.

A feeding (inlet) duct 4 and a transfer duct 5 are respectively located upward and downward of said pair of wheels 12a and 12b for transporting the corks along the directions indicated by the arrows F in Figure.

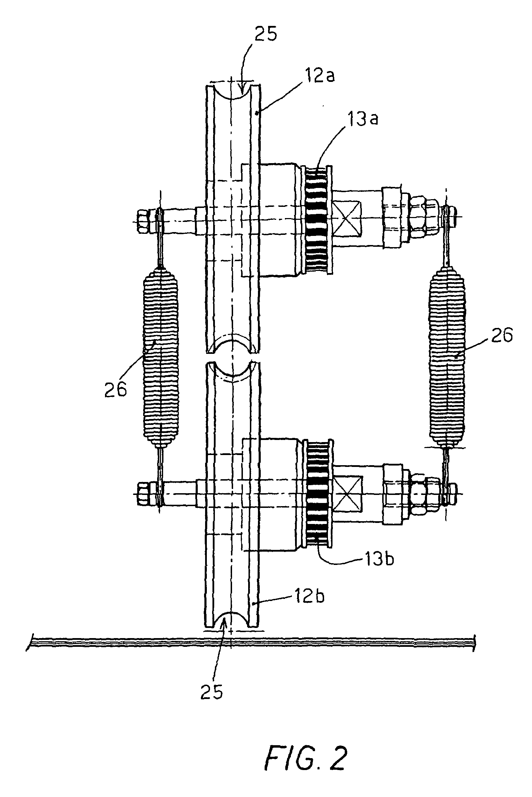

With reference to Figure 2, both wheels 12a, 12b are provided with circumferential grooves 25 having a semicircular profile and defining together a channel with a substantially circular cross-section for the passage of the corks 3.

As a consequence, when the wheels 12a and 12b are rotated in opposite directions, a tangential force is longitudinally applied onto the lateral surface of the corks 3, such force allowing the transfer of the corks from the feeding duct 4 to the transfer duct 5. Then the corks are transferred - along the duct 5 - to the corking machine thanks to the force applied to each cork by the following corks.

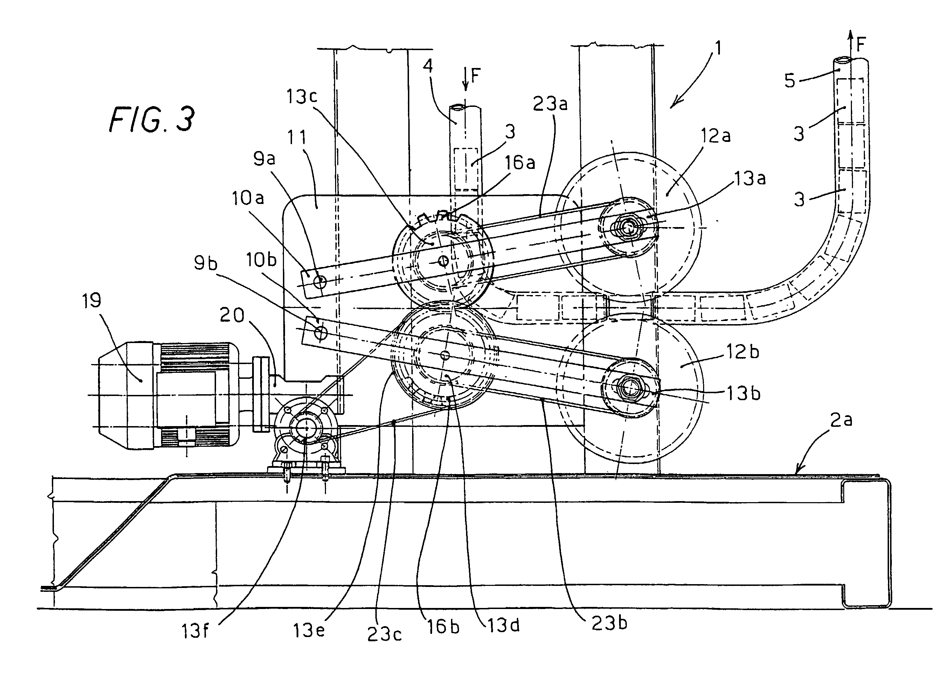

Referring now to Figure 3, in which for simplicity sake the springs 26 have been omitted, the wheels 12a and 12b are rotatably mounted to an upper arm or lever 10a and a lower arm or lever 10b, respectively. Such levers 10a and 10b are in turn pivotally mounted to a support wall 11, respectively at pivot points 9a and 9b, so as to accomplish a swinging or rocking motion under the return force of the helical springs 26.

There are further provided a plurality of pulleys 13a to 13f and a pair of toothed wheels or gears 16a, 16b, respectively, for transferring the motion - by means of toothed belts 23a to 23c - from a gearmotor 20 to the wheels 12a and 12b, and for inverting the rotating direction of one of the wheels 12a, 12b with respect to the other.

More precisely, a first pair of pulleys 13a, 13b are coupled to the wheels 12a and 12b, respectively, and a second pair of pulleys 13c, 13d are rotatably mounted to the rocking levers 10a and 10b, respectively, at intermediate locations between the wheels 12a, 12b and the pivot points 9a and 9b, respectively. Belts 23a and 23b are respectively provided for transmitting the motion from the pulley 13c to the pulley 13a and from the pulley 13d to the pulley 13b.

To each pulley 13c, 13d a corresponding gear 16a, 16b is coupled. The teeth size of each gear is such as to maintain the engagement between the gears 16a and 16b even when the levers 10a and 10b oscillate because of the different diameters of the corks.

Pulley 13d is coupled to a pulley 13e that is driven by the gearmotor 20 equipped with a corresponding pulley 13f fastened to the output shaft of the gearmotor 20, by a toothed belt 23c. The gearmotor 20 is further coupled to an electric motor 19.

In the illustrated embodiment the device according to the invention provides for a pair of rotating wheels 12a, 12b, both of which are driven. According to an alternate embodiment of the invention such device is provided with a single driven wheel the other being an idle wheel.

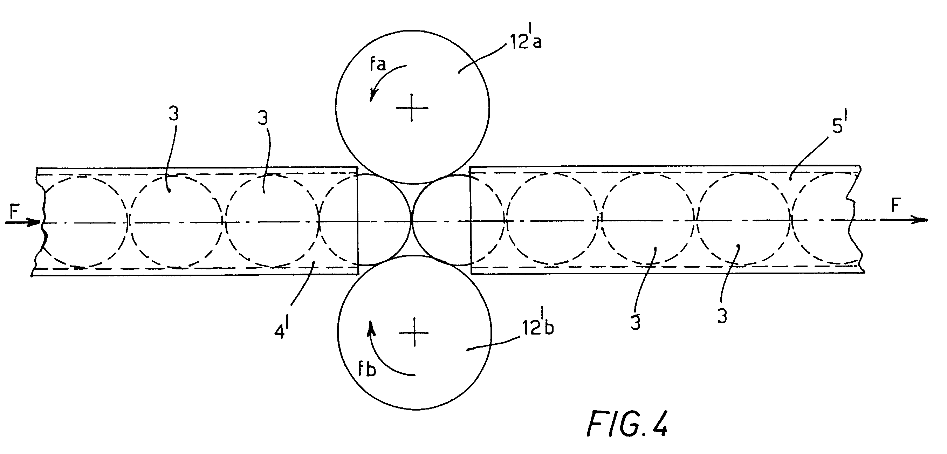

According to another embodiment of the invention, schematically illustrated in Figure 4, the transfer of the corks 3 is accomplished by the device 1 on corks that are transversely disposed with respect to the transfer direction.

The transfer is accomplished through a pair of rotatable wheels 12'a, 12'b rotating in opposed directions as indicated by the arrows fa and fb, such wheels imparting to the lateral surface of the corks a tangential and continuous force that is transverse to the cork axes.

According to this embodiment the ducts 4' and 5' have a rectangular cross section and a size adapted to allow the passage of the largest corks.

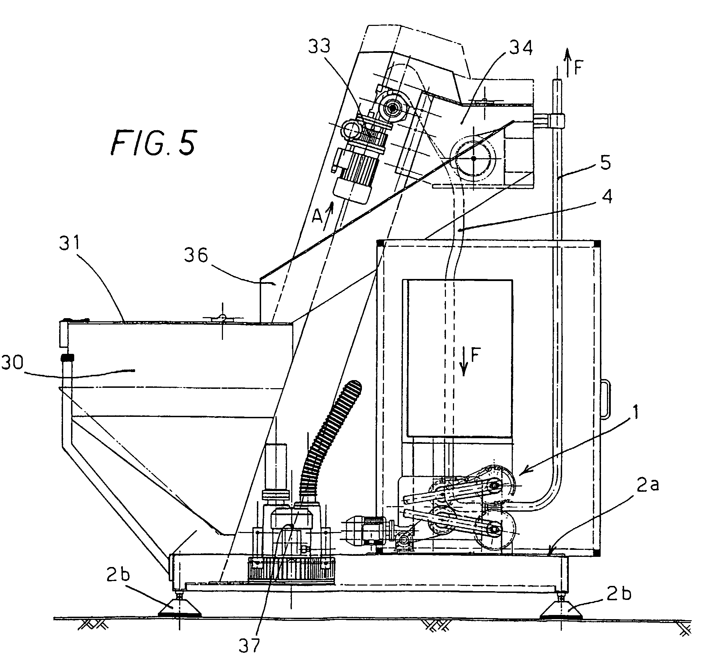

With reference now to Figure 5, it is illustrated a device 1 for continuously feeding corks according to the invention, that is disposed on the base 2a of a cork feeding machine 2 provided with adjustable support feet 2b.

The feeding machine 2 comprises a hopper 30 that can be closed by a cover 31 for insulating the hopper from the external environment, a lifting belt, not shown in the Figure, driven by an electric motor 33 for transporting the corks 3 along the path shown by the arrow A, and a vessel 34 into which the corks have been haphazardly poured, the vessel being equipped with a known device for inserting the corks 3 one by one into the feeding duct 4.

The feeding machine 2 further comprises a channel 36 for recovering the corks in excess and returning them into the hopper 30, and a suction device 37 at the base of the hopper 30 for sucking the corks powders and particles generated by the rubbing of the corks 3 inside the hopper.

Advantageously since the device according to the invention does not need to be air-tight, the walls of ducts 4 and 5 can be provided with windows or made as a metal wire cage so that the cork powders and particles formed along the cork path can be dispersed or removed by means of blowers provided with sterile filters or exhausters disposed along the transfer duct.

In case a very high level of cork sterility is desired, the transfer device 1 and the ducts 4 and 5 can advantageously be insulated from the environment through sealed casings and ducts.

## Claims

1. A device for continuously feeding corks comprising:
- a feeding duct (4);
- a transfer duct (5);
- rotating means (12a, 12b, 12'a, 12'b) disposed between said feeding duct (4) and transfer duct (5) for imparting a tangential and continuous force onto the lateral surface of said corks (3) for transferring said corks from said feeding duct to said transfer duct,
**characterised in that** in said feeding duct and in said transfer duct, when in use, the corks are disposed in a row.

2. A cork feeding device as claimed in claim 1, wherein said rotating means (12a, 12b, 12'a, 12'b) comprises at least one motor-driven wheel positioned so as to impart a longitudinal force onto the lateral surface of said corks (3).

3. A cork feeding device as claimed in claim 1, wherein said rotating means (12a, 12b, 12'a, 12'b) comprises at least one motor-driven wheel positioned so as to impart a transverse force onto the lateral surface of said corks (3)

4. A cork feeding device as claimed in claim 2 o 3, wherein said rotating means (12a, 12b, 12'a, 12'b) comprises a pair of coplanar wheels, kept near to one another by elastic means (26) or counterweights, so as to define a passage channel for said corks (3) between said wheels, at least one of said wheels being motor-driven.

5. A cork feeding device as claimed in claim 4, wherein both said wheels are mounted on corresponding rocking levers (10a,10b).

6. A cork feeding device as claimed in claim 5, wherein both said wheels (12a, 12b, 12'a, 12'b) are rotated by means of toothed belts (23a-23b) mounted on corresponding pulleys (13a-13d) provided on each rocking lever.

7. A cork feeding device as claimed in claim 6, wherein said rocking levers (10a,10b) further carry a pair of gears (16a, 16b) for moving said toothed belts (23a,23b), and therefore said wheels (12a, 12b, 12'a, 12'b), in opposite directions.

8. A cork feeding device as claimed in claim 7 further comprising a gearmotor (20) coupled through a toothed belt (23c) to one of said pulleys on said rocking levers (10a, 10b).

9. A cork feeding device as claimed in claim 4 when depending from claim 2, wherein said wheels (12a, 12b, 12'a, 12'b) have a circumferential groove (25) with a semicircular profile defining a substantially circular cross-section channel for the passage of said corks (3).

10. An apparatus for feeding corks to a corking machine, equipped with a feeding device (1) as claimed in any of claims 1 to 9.

## Patentansprüche

1. Vorrichtung zur kontinuierlichen Zuführung von Korken
- mit einem Zuführkanal (4),
- mit einem Überführungskanal (5) und
- mit Dreheinrichtungen (12a, 12b, 12'a, 12'b), die zwischen dem Zuführkanal (4) und dem Überführungskanal (5) angeordnet sind, um auf die seitliche Fläche der Korken (3) eine tangentiale und dauernde Kraft für die Überführung der Korken aus dem Zuführkanal zum Überführungskanal auszuüben,
**dadurch gekennzeichnet,**
- **dass** in dem Zuführkanal und in dem Überführungskanal, wenn sie in Benutzung sind, die Korken in einer Reihe angeordnet sind.

2. Korkenzuführvorrichtung nach Anspruch 1, bei welcher die Dreheinrichtungen (12a, 12b, 12'a, 12'b) wenigstens ein motorgetriebenes Rad aufweisen, das so angeordnet ist, dass es eine Längskraft auf die seitliche Fläche der Korken (3) ausübt.

3. Korkenzuführvorrichtung nach Anspruch 1, bei welcher die Dreheinrichtungen (12a, 12b, 12'a, 12'b) wenigstens ein motorgetriebenes Rad aufweisen, das so angeordnet ist, dass es auf die seitliche Fläche der Korken (3) eine Querkraft ausübt.

4. Korkenzuführvorrichtung nach Anspruch 2 oder 3, bei welcher die Dreheinrichtungen (12a, 12b, 12'a, 12'b) ein Paar von koplanaren Rädern aufweist, die nahe beieinander durch elastische Einrichtungen (26) oder durch Gegengewichte so.gehalten sind, dass sie einen Durchgangskanal für die Korken (3) zwischen den Rädern bilden, von denen wenigstens eines motorgetrieben ist.

5. Korkenzuführvorrichtung nach Anspruch 4, bei welcher die beiden Räder an entsprechenden Schwinghebeln (10a, 10b) angeordnet sind.

6. Korkenzuführvorrichtung nach Anspruch 5, bei welcher die beiden Räder (12a, 12b, 12'a, 12'b) mit Hilfe von Zahnriemen (23a, 23b) gedreht werden, die an entsprechenden Scheiben (13a bis 13d) angeordnet sind, die an jedem Schwinghebel vorgesehen sind.

7. Korkenzuführvorrichtung nach Anspruch 6, bei welcher die Schwinghebel (10a, 10b) weiterhin ein Paar von Zahnrädern (16a, 16b) für ein Bewegen der Zahnriemen (23a, 23b) und somit der Räder (12a, 12b, 12'a, 12'b) in entgegengesetzte Richtungen halten.

8. Korkenzuführvorrichtung nach Anspruch 7, welche weiterhin einen Getriebemotor (20) aufweist, der über einen Zahnriemen (23c) mit einer der Scheiben an den Schwinghebeln (10a, 10b) verbunden ist.

9. Korkenzuführvorrichtung nach Anspruch 4, wenn dieser von Anspruch 2 abhängig ist, bei welcher die Räder (12a, 12b, 12'a, 12'b) eine Umfangsnut (25) mit einem Halbkreisprofil haben, das einen Kanal mit einem im Wesentlichen kreisförmigen Querschnitt für den Durchgang der Korken (3) bildet.

10. Einrichtung zum Zuführen von Korken zu einer Bekorkungsmaschine die mit einer Zuführvorrichtung (1) nach einem der Ansprüche 1 bis 9 versehen ist.

## Revendications

1. Dispositif pour fournir, de façon continue, des bouchons de liège comprenant :
- une conduite d'alimentation (4),
- une conduite de transfert (5) ;
- des moyens de rotation (12a, 12b, 12'a, 12'b) disposés entre ladite conduite d'alimentation (4) et ladite conduite de transfert (5) pour communiquer une force tangentielle et continue sur la surface latérale desdits bouchons (3) en vue de faire passer lesdits bouchon de ladite conduite d'alimentation à ladite conduite de transfert,
**caractérisé en ce que** dans ladite conduite d'alimentation et ladite conduite de transfert, lorsque le dispositif fonctionne, les bouchons sont disposés selon une rangée.

2. Dispositif d'alimentation en bouchons selon la revendication 1, dans lequel lesdits moyens de rotation (12a, 12b, 12'a, 12'b) comprennent, au moins, une roue entraînée par un moteur positionnée de façon à communiquer une force longitudinale sur la surface latérale desdits bouchons (3).

3. Dispositif d'alimentation en bouchons selon la revendication 1, dans lequel lesdits moyens de rotation (12a, 12b, 12'a, 12'b) comprennent au moins une roue entraînée par un moteur positionnée de façon à communiquer une force transversale sur la surface latérale desdits bouchons (3).

4. Dispositif d'alimentation en bouchons selon la revendication 2 ou 3, dans lequel lesdits moyens de rotation (12a, 12b, 12'a, 12'b) comportent une paire de roues coplanaires, maintenues l'une près de l'autre par des moyens élastiques (26) ou par des contrepoids, de façon à définir un canal de passage pour lesdits bouchons (3) entre lesdites roues, une desdites roues au moins étant entraînée par un moteur.

5. Dispositif d'alimentation en bouchons selon la revendication 4, dans lequel les deux dites roues mont montées sur des leviers à genouillère à bras unique correspondants (10a, 10b).

6. Dispositif d'alimentation en bouchons selon la revendication 5, dans lequel les deux dites roues (12a, 12b, 12'a, 12'b) sont mises en rotation au moyen de courroies dentées (23a-23b) montées sur des poulies correspondantes (13a-13d) prévues sur chaque levier à genouillère à bras unique.

7. Dispositif d'alimentation en bouchons selon la revendication 6, dans lequel lesdits leviers à genouillère à bras unique (10a, 10b) portent, de plus, une paire de pignons (16a, 16b) servant à déplacer lesdites courroies dentées (23a, 23b), et, en conséquence, lesdites roues (12a, 12b, 12'a, 12'b), dans des directions opposées.

8. Dispositif d'alimentation en bouchons selon la revendication 7, comprenant, de plus un moteur à engrenage (20) couplé par l'intermédiaire d'une courroie dentée (23c) à l'une desdites poulies sur lesdits leviers à genouillère à bras unique (10a, 10b).

9. Dispositif d'alimentation en bouchons selon la revendication 4 lorsqu'elle est dépendante de la revendication 2, dans lequel lesdites roues (12a, 12b, 12'a, 12'b) comportent une gorge périphérique (25) présentant un profil semi-circulaire définissant un canal à section transversale essentiellement circulaire pour le passage desdits bouchons (3).

10. Dispositif pour fournir des bouchons à une machine à boucher les bouteilles, dotée d'un dispositif d'alimentation (1) selon l'une quelconque des revendications 1 à 9.
